Europäisches Patentamt

**European Patent Office**

Office européen des brevets

(19)

(11) Numéro de publication: **0 018 882**
**B1**

(12)                    **FASCICULE DE BREVET EUROPEEN**

(45) Date de publication du fascicule du brevet: **09.02.83**

(21) Numéro de dépôt: **80400519.7**

(22) Date de dépôt: **18.04.80**

(51) Int. Cl.³: **B 01 J 3/04,** C 08 F 2/34,
C 08 F 10/02

(54) **Procédé pour réduire les risques d'inflammation et d'explosion résultant de la décomposition de l'éthylène sous haute pression et dispositif pour la mise en oeuvre dudit procédé.**

(30) Priorité: **25.04.79 FR 7910443**

(43) Date de publication de la demande:
**12.11.80 Bulletin 80/23**

(45) Mention de la délivrance du brevet:
**09.02.83 Bulletin 83/6**

(84) Etats contractants désignés:
**AT BE CH DE GB IT LI LU NL SE**

(56) Documents cités:
**FR - A - 2 116 147**

(73) Titulaire: **Société Chimique des Charbonnages
Tour Aurore Place des Reflets Cédex no 5
F-92080 Paris La Défense 2 (FR)**

(72) Inventeur: **Durand, Pierre
5, rue Bertaux Dumas
F-92200 Neuilly sur Seine (FR)**
Inventeur: **Jouffroy, Guy
Pavillon no. 27 Les Bosquets de St Arnoult
F-76490 St Arnoult Par Caudedec en Caux (FR)**

(74) Mandataire: **Dubost, Thierry
Société Chimique des Charbonnages Service
Propriété Industrielle B.P. No 1
F-62160 Bully Les Mines (FR)**

Courier Press, Leamington Spa, England.

## Procédé pour réduire les risques d'inflammation et d'explosion résultant de la décomposition de l'éthylène sous haute pression et dispositif pour la mise en oeuvre dudit procédé

La présente invention concerne un procédé pour réduire les risques d'inflammation et d'explosion résultant de la décomposition de l'éthylène dans une installation de polymérisation sous haute pression, ainsi qu'un dispositif pour la mise en oeuvre dudit procédé.

Il est bien connu que, au cours de la réaction de polymérisation de l'éthylène sous haute pression (300 à 3000 bars environ) et à haute température (150°C à 350°C environ), certains incidents de fonctionnement tels que des défaillances mécaniques ou une pureté insuffisante de l'éthylène gazeux peuvent, malgré le contrôle attentif des indicateurs de pression et de température, provoquer l'échauffement jusqu'à une température supérieure à 450°C environ d'une fraction, même infime, de l'éthylène contenu dans le réacteur de polymérisation ou dans le séparateur (fonctionnant habituellement sous une pression de 100 à 500 bars). Un tel échauffement suffit à initier la décomposition de cette fraction d'éthylène en un mélange de carbone, d'hydrogène et de méthane. De plus, les conditions précitées de fonctionnement des réacteur et séparateur sont telles qu'elles permettent une propagation rapide de toute décomposition initiée, conduisant invariablement à l'élévation rapide de la pression et/ou la température. La rupture d'au moins un organe (disque, soupape, vanne) de protection protège les réacteur et séparateur contre les suppressions et permet aux produits de décomposition de s'échapper vers l'extérieur. Outre le phénomène de pollution causé par le rejet à l'extérieur de carbone pulvérulent, on doit surtout redouter l'inflammation des gaz de décomposition qui est à l'origine d'explosions violentes pouvant occasionner des dégats matériels et humains.

Contre cette inflammation et ses conséquences néfastes, plusieurs solutions cherchant à satisfaire aux exigences de sécurité lors de la détente d'installations de polymérisation sous haute pression ont déjà été proposées, notamment par les brevets français no. 2.116.147, 2.165.018 et 2.358.427 et par les demandes de brevet japonais no. 48-51.336/73 et 48-51.337/73 déposées le 9 Mai 1973. Ces solutions ont toutes en commun de remédier à l'une au moins des trois conditions supposées de l'inflammation des gaz de décomposition: pression élevée, température élevée, vitesse supersonique des gaz. Elles consistent donc le plus souvent à refroidir par différents moyens les gaz de décomposition dont la température initiale est, comme on l'indique plus haut, supérieure à 450°C et peut atteindre jusqu'à 1500°C. Accessoirement, il est proposé, en vue d'éviter la pollution de l'atmosphère environnante par les gaz de décomposition, d'abaisser la pression et/ou la vitesse des gaz en-dessous de la vitesse du son. En bref, toutes ces solutions sont basées sur l'hypothèse formulée dans le brevet français no. 2.116.147, selon laquelle le problème de l'inflammation des gaz de décomposition se résumerait au problème de l'auto-inflammation de ces gaz par l'effet de leur propre température élevée.

Or la demanderesse vient de faire la découverte surprenante que, contrairement à l'enseignement de la technique actuelle, l'auto-inflammation des gaz de décomposition par l'effet de leur propre température élevée ne constitue pas nécessairement la cause principale de l'inflammation de ces gaz et n'en constitue même le plus souvent qu'une cause secondaire. Cette découverte résulte d'expériences effectuées, en l'absence de décomposition dans le réacteur, par des essais de rupture d'au moins un organe de protection, la température de l'éthylène à l'instant précédant la rupture ne dépassant pas 200°C. Ces expériences ont montré que, malgré l'absence d'échauffement anormal avant la rupture de l'organe, on observe l'émission de gaz enflammé à la sortie de la conduite d'évacuation (cheminée) et on peut mettre en évidence l'existence d'une onde de choc se propageant à une vitesse de 500 à 700 m/s environ. Il semble que l'on puisse expliquer le phénomène observé de la façon suivante: après la rupture de l'organe de protection, l'air contenu dans la conduite d'évacuation (cheminée) et initialement au repos est parcouru par une onde de pression se déplaçant à une vitesse fonction de sont intensité et supérieure à la vitesse du son dans le milieu. Cette onde de pression, qui précède donc l'écoulement de l'éthylène ou des gaz de décomposition dans la conduite d'évacuation, comprime et échauffe l'air contenu dans ladite conduite. De plus, étant donné que la conduite d'évacuation n'est généralement pas intégralement linéaire mais comporte au moins soit une section courbée reliant la paroi latérale du réacteur ou séparateur à la section verticale de la cheminée soit une variation de section, l'onde de pression n'est généralement pas plane et peut donc se réfléchir sur les parois de la conduite d'évacuation; ces réflexions de l'onde rendent possibles des focalisations d'ondes sur l'axe de symétrie de ladite conduite et donc l'échauffement de points particuliers dans la conduite d'évacuation. Enfin la possibilité de réflexions successives du disque de protection sur les parois de la cheminée constitue une troisième cause d'échauffements locaux accompagnant l'échauffement par l'onde de pression et y ajoutant leurs effets.

Les phénomènes d'échauffement qui viennent d'être décrits suffisent, en l'absence de toute décomposition de l'éthylène, à porter la température en des points particuliers de la cheminée à plus de 600°C. Les phénomènes de diffusion, les différences de vitesse du gaz en écoulement dans la cheminée entre les parois de celle-ci et son axe de symétrie, les variations de section et les changements de direction de la cheminée contribuent localement à la formation de zones de pré-mélange de l'air et du gaz. C'est à l'interface air chaud-éthylène, qui se déplace à une vitesse inférieure à l'onde de pression et qui succède donc à cette onde, et plus précisément au niveau de ces zones de pré-mélange, que s'initie l'inflammation. Les zones de pré-mélange sont ensuite entraînées par la vidange vers l'extérieur de la cheminée; elles disparaissent donc rapidement dans la cheminée lors du remplacement de l'air par le gaz. De même la flamme est portée par l'écoulement vers la section de sortie de la cheminée où elle se maintient le temps de la vidange complète. L'inflammation de gaz par l'effet d'onde de pression qui vient d'être décrit est favorisée par une température élevée dudit gaz, celle-ci ayant pour effet d'accroître la température du mélange air-gaz et par suite un gaz de décomposition est susceptible de s'enflammer par l'effet d'onde de pression plus aisément que de l'éthylène à 200°C. Cet accroissement de la température du mélange air-gaz fait ainsi apparaître l'auto-inflammation des gaz de décomposition par l'effet de leur propre température, jadis considérée comme la cause première des inflammations, comme une cause dérivée et secondaire de l'effet d'onde de pression.

Ceci explique que toutes les solutions de l'art antérieur au problème des inflammations, décrites dans les brevets déjà cités, aient eu pour objet de refroidir les gaz de décomposition soit au stade de leur vidange vers l'extérieur soit au stade de leur récupération. Ces solutions ne prenaient donc pas suffisamment en compte le paramètre temporel du phénomène depuis l'ouverture de l'organe de protection jusqu'à la fin de la vidange. Ce paramètre s'est pourtant révélé, d'après les travaux de la demanderesse, être, d'une importance cruciale. En effet les brevets cités indiquent que la durée de la vidange est généralement comprise entre 3 et 10 secondes et le brevet français no. 2.116.147 indique que le temps écoulé entre l'ouverture de l'organe de protection et le moment où le gaz arrive au dispositif de refroidissement est compris entre 50 et 100 millisecondes environ. Il n'est pas étonnant dans ces conditions que l'efficacité des solutions de l'art antérieur ait été insuffisante puisque, selon les observations de la demanderesse, la durée de la phase instationnaire de l'écoulement donnant lieu à l'effet d'onde de pression est le plus souvent inférieure ou égale à 25 millisecondes. Il résulte de la découverte de la nature et de la durée de la cause première des inflammations résultant de la décomposition de l'éthylène dans une installation de polymérisation sous haute pression que l'efficacité d'un procédé et d'un dispositif pour en réduire les risques ne dépend pas tant de la puissance des moyens mis en oeuvre que de l'instant auquel ils sont mis en oeuvre. En particulier il faut noter que le procédé de récupération des produits de décomposition décrit dans le brevet français no. 2.358.427 est d'une efficacité très aléatoire lorsque les risques d'inflammation n'ont pas été supprimés dès la sortie du réacteur ou séparateur.

Un premier but de la présente invention consiste donc à réduire les risques d'inflammation et par conséquent d'explosion résultant de la décomposition de l'éthylène sous haute pression, et en particulier ceux survenant au cours de la phase instationnaire d'écoulement des gaz de décomposition. Un second but de la présente invention consiste à minimiser les risques d'inflammation et d'explosion au cours de ladite phase instationnaire à un point tel que la récupération des gaz de décomposition, notamment en vue d'éviter toute pollution, puisse être effectuée de manière parfaitement sûre.

La demanderesse a découvert de manière surprenante que les buts précités peuvent être atteints en s'écartant des enseignements de l'art antérieur et de manière simple au moyen du procédé selon l'invention consistant à maintenir sous atmosphère inerte au moins une partie du dispositif d'évacuation compris entre l'enceinte sous pression (réacteur ou séparateur) dans laquelle est susceptible de se produire une décomposition de l'éthylène d'une part et l'extérieur d'autre part. La partie du dispositif d'évacuation immédiatement adjacente à l'enceinte sous haute pression doit être maintenue sous atmosphère inerte. Par maintien sous atmosphere inerte d'au moins une partie du dispositif d'évacuation, on entend qu'une atmosphère inerte règne sur cette partie du dispositif d'évacuation avant l'ouverture de l'organe de protection de l'enceinte sous pression, c'est-à-dire en service normal de ladite enceinte. Après l'ouverture de l'organe de protection, la vidange des gaz a pour effet de supprimer le dispositif de maintien de l'atmosphère inerte et, par suite, de perturber l'atmosphère dans la partie protégée du dispositif d'évacuation en permettant l'entrée progressive d'air extérieur. Par atmosphère inerte on entend une atmosphère substantiellement exempte de gaz capables de régair avec les gaz de décomposition (méthane, hydrogène, éthylène) et en particulier substantiellement exempte d'oxygène; une telle atmosphère sera constituée d'au moins un gaz dit inerte tel que, par exemple, l'azorte le dioxyde de carbone, l'éthylène ou un gaz rare de l'air (argon, hélium, néon, krypton, xénon). Conformément à l'invention une partie au moins, de préférence la plus grande partie et dans la mesure du possible la totalité du dispositif d'évacuation, doit être maintenue sous atmosphère inerte. Cela est vrai bien entendu de la partie du dispositif d'évacuation immédiatement adjacente à l'enceinte sous haute pression (réacteur ou séparateur) dans laquelle est susceptible de se produire une décomposition de l'éthylène mais aussi de la partie du dispositif d'évacuation la plus proche de l'extérieur, c'est-à-dire de l'extrémité de la cheminée.

Il est remarquable que le procédé selon l'invention ne requiert pas une modification importante du dispositif d'évacuation des gaz employé habituellement, par exemple du type cheminée. En effet le procédé selon l'invention est d'autant plus efficace pour la diminution des risques d'inflammation et d'explosion au cours de la phase instationnaire de la vidange que la pression de gaz inerte maintenue dans le dispositif d'évacuation est plus faible; pour cette raison, ladite pression de gaz inerte est choisie de préférence inférieure ou égale à 1,5 bar. Il en résulte que le procédé selon l'invention peut être mis en oeuvre de manière simple, par exemple en disposant, au travers du dispositif d'évacuation et de préférence à proximité de sa sortie vers l'extérieur, un dispositif d'obturation, l'espace compris entre ledit dispositif d'obturation et l'organe de protection de l'enceinte sous haute pression étant rempli d'au moins un gaz inerte sous une pression inférieure ou égale à 1,5 bar. Un exemple d'un tel dispositif d'obturation est constitué par une baudruche en caoutchouc gonflée au moyen d'un gaz à une pression supérieure à la pression régnant dans le dispositif d'évacuation mais néanmoins inférieure ou égale à 2 bars. Le gaz contenu dans la baudruche est de préférence un gaz inerte comme défini précédemment.

Le procédé selon l'invention peut bien entendu être combiné avec des procédés ou dispositifs connus de réduction des risques d'inflammation et d'explosion résultant de la décomposition de l'éthylène sous haute pression, notamment avec les procédés ou dispositifs consistant à refoirdir les gaz de décomposition comme par exemple ceux décrits dans les brevets français no. 2.116.147 et 2.165.018. Il a alors pour résultat d'améliorer leur efficacité en permettant un refroidissement plus rapide puisqu'il a eu pour fonction préalable de réduire et même d'éviter l'échauffement incontrôlable de ces gaz au-dessus de leur température d'inflammation (600° environ). Le procédé selon l'invention peut aussi être combiné avec des procédés connus de récupération des produits de décomposition, comme par exemple celui décrit dans le brevet français no. 2.358.427, dont il a alors pour résultat d'améliorer la sécurité.

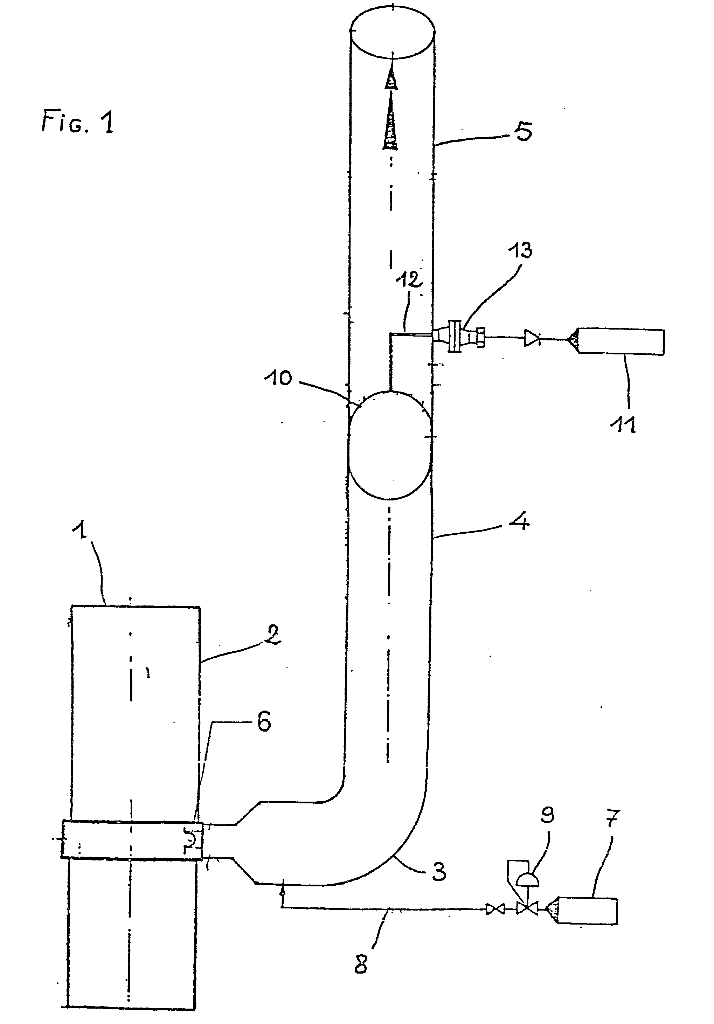

L'invention sera mieux comprise grâce à l'illustration du mode de réalisation représenté sur la figure unique en annexe. Selon ce mode de réalisation, la référence 1 désigne l'enceinte sous haute pression disposée verticalement dans laquelle est effectuée soit la réaction de polymérisation de l'éthylène (réacteur) soit la séparation du polyéthylène formé et de l'éthylène n-ayant pas réagi (séparateur). Cette enceinte est généralement de forme cylindrique ou tubulaire. Cette enceinte est raccordée par l'une de ses parois latérales référencées 2, en prévision des cas d'urgence où son contenu doit être évacué vers l'extérieur, à une conduite d'évacuation du type cheminée comportant une première section courbée 3 immédiatement adjacente à l'enceinte, une section médiane 4 et une section supérieure 5, ces deux dernières étant disposées verticalement. Il faut comprendre que l'existence de la section 3 ne s'explique que lorsque l'enceinte 1 est disposée verticalement et qu'elle peut ne plus être nécessaire lorsque l'enceinte 1 est disposée horizontalement comme dans le cas d'un réacteur tubulaire. L'enceinte 1 et la section 3 (ou la section 4 lorsque cette dernière est inexistante) sont séparées par un disque de protection 6 représenté schématiquement sur la figure et taré à une pression de rupture supérieure à la pression maximale de fonctionnement normal de l'enceinte 1. Un circuit de distribution 7 de gaz inerte, par exemple l'azote, est relié à la section 3 de la cheminée par l'intermédiaire d'un conduit 8 sur lequel est placée une vanne 9 contrôlant le volume de gaz inerte délivré à la conduite d'evacuation et, par suite, la pression à l'intérieur de celle-ci qui doit rester inférieure ou égale à 1,5 bar. Un ballon 10 en caoutchouc occupant toute la section de la conduit d'évacuation sépare les sections 4 et 5 de celle-ci. Un circuit de distribution 11 de gaz inerte, par exemple l'azote, est relié au ballon 10 par l'intermédiaire d'un conduit 12 sur lequel est placé un dispositif d'admission 13 contrôlant le volume de gaz inerte délivré au ballon 10, et, par suite, la pression à l'intérieur de celui-ci qui doit rester supérieure á la pression dans les sections 3 et 4 de la cheminée et néanmoins inférieure à 2 bars. Par exemple, lorsque la pression en 3 est réglée à une valeur de 1,2 bar, on pourra régler la pression en 10 à une valeur de 1,4 bar.

Ainsi la présente invention concernes aussi, en vue d'atteindre ses deux buts précités, un dispositif pour la mise en oeuvre du procédé décrit précédemment. Le dispositif selon l'invention est un dispositif d'évacuation vers l'extérieur des gaz contenus dans une enceinte sous haute pression, comprenant une conduite d'évacuation adjacente à ladite enciente et séparé d'elle par un organe de protection, et comprenant:

— un dispositif d'obturation placé sur le chemin d'évacuation des gaz et occupant toute la section de la conduite d'évacuation,

— un premier circuit de distribution de gaz relié par un conduit à la partie de la conduite d'évacuation située entre l'organe de protection et le dispositif d'obturation, et des moyens de fermeture dudit conduit pour contrôler le volume de gaz délivré par ledit premier circuit de distribution.

Le dispositif d'obturation de la conduite d'évacuation utilisé dans le cadre de l'invention est avantageusement constitué, comme décrit plus haut, d'un ballon ou d'une baudruche en matière caoutchouteuse. Dans ce cas, le dispositif d'évacuation comprend en outre un second circuit de distribution de gaz relié par un conduit au dispositif d'obturation, et des moyens d'admission de gaz situés sur ledit conduit pour contrôler le volume de gaz délivré par ledit second circuit de distribution. Ainsi le dispositif selon l'invention est d'une conception simple et sa réalisation ne met en jeu que des éléments et des techniques bien connus. Son entretien est également très simple à assurer. Le dispositif selon l'invention peut en outre comporter des moyens pour injecter un agent de refroidissement dans la conduite d'évacuation soit au-dessus soit en dessous du dispositif d'obturation, lesdits moyens étant commandés par un dispositif de détection de l'ouverture de l'organe de protection. Dans les cas où l'on peut craindre un déclenchement intempestif de ce dispositif de détection et où la géométrie de la conduite d'évacuation est telle que l'agent de refroidissement peut entrer en contact avec l'organe de protection et risquer de fragiliser celui-ci par l'effet de la différence de température, ou d'obturer partiellement la conduite d'evacuation par l'agent de refroidissement, il sera avantageux de disposer les moyens d'injection dans la partie de la conduite d'évacuation située au-dessus du dispositif d'obturation.

Le dispositif décrit et illustré ci-dessus permet, lorsu'il est utilisé dans le cadre du procédé selon l'invention, d'atteindre pleinement les buts fixés, à savoir de réduire la fréquence des inflammations et explosions résultant de la décomposition de l'éthylène dans les installations de polymérisation sous haute pression et de permettre la récupération des produits de décomposition dans des conditions suffisantes de sécurité.

## Revendications

1. Procédé pour réduire les risques d'inflammation et d'explosion résultant de la décomposition de l'éthylène sous haute pression, consistant à maintenir sous atmosphère inerte, c'est-à-dire substantiellement exempte de gaz capables de réagir avec les gaz de décomposition, au moins la partie du dispositif d'évacuation immédiatement adjacente à l'enceinte sous haute pression dans laquelle est susceptible de se produire une décomposition de l'éthylène.

2. Procédé selon la revendication 1, caractérisé en ce que l'atmosphère inerte est constituée d'au moins un gaz choisi parmi l'azote, le dioxyde de carbone, l'éthylène, l'argon, l'hélium, le néon, le krypton, et le xénon.

3. Procédé selon l'une des revendications 1 et 2, caractérisé en ce que la pression de l'atmosphère inerte maintenue dans ladite partie du dispositif d'évacuation est inférieure ou égale à 1,5 bar.

4. Procédé selon la revendication 3, caractérisé en ce que la pression de l'atmosphère inerte est maintenue en disposant au travers du dispositif d'évacuation un dispositif d'obturation gonflé au moyen d'un gaz à une pression supérieure à la pression de l'atmosphère inerte mais inférieure ou égale à 2 bars.

5. Dispositif d'évacuation vers l'extérieur des gaz contenus dans une enceinte sous haute pression, comprenant une conduite d'évacuation adjacente à ladite enceinte et séparé d'elle par une organe de protection, caractérisé en ce qu'il comprend, pour la mise en oeuvre du procédé selon la revendication 1:

— un dispositif d'obturation placé sur le chemin d'évacuation de gaz et occupant toute la section de la conduite d'évacuation,
— un premier circuit de distribution de gaz inerte relié par un conduit à la partie de la conduite d'évacuation située entre l'organe de protection et le dispositif d'obturation, et des moyens de fermeture dudit conduit pour contrôler le volume de gaz délivré par ledit premier circuit de distribution.

6. Dispositif selon la revendication 5, caractérisé en ce que le dispositif d'obturation est une baudruche en caoutchouc et en ce que le dispositif d'évacuation comprend en outre un second circuit de distribution de gaz relié par un conduit au dispositif d'obturation, et des moyens d'admission de gaz situés sur ledit conduit pour contrôler le volume de gaz délivré par ledit second circuit de distribution.

7. Dispositif selon l'une des revendications 5 et 6, comprenant en outre des moyens pour injecter un agent de refroidissement dans la conduite d'évacuation, lesdits moyens étant commandés par un dispositif de détection de l'ouverture de l'organe de protection.

8. Dispositif selon la revendication 7, caractérisé en ce que les moyens pour injecter un agent de refroidissement sont disposés dans la partie de la conduite d'évacuation située au-dessus du dispositif d'obturation.

## Patentansprüche

1. Verfahren zur Verringerung der Entzündungs- und Explosionsgefahr infolge des Zerfalls von unter hohem Druck stehendem Äthylen, welches darin besteht, daß zumindest der an den unter hohem Druck stehenden umschlossenen Raum, in dem die Gefahr des Auftretens eines Zerfalls des Äthylens besteht, unmittelbar angrenzende Teil der Evakuiervorrichtung unter einer inerten, d.h. im wesentlichen von zur Reaktion mit den Spaltgasen fähigen Gasen freien Atmosphäre gehalten wird.

2. Verfahren nach Anspruch 1, dadurch gekennzeichnet, daß die inerte Atmosphäre mindestens von einem Gas der Gruppe bestehend aus Stickstoff, Kohlendioxid, Äthylen, Argon, Helium, Neon, Krypton und Xenon gebildet ist.

3. Verfahren nach Anspruch 1 oder 2, dadurch gekennzeichnet, daß der Druck der in dem genannten Teil der Evakuiervorrichtung aufrechterhaltenen inerten Atmosphäre weniger als oder 1,5 bar beträgt.

4. Verfahren nach Anspruch 3, dadurch gekennzeichnet, daß der Druck der inerten Atmosphäre dadurch aufrechterhalten wird, daß quer über die Evakuiervorrichtung eine Verschlußeinrichtung angeordnet wird, die mittels eines Gases aufgeblasen ist, das unter einem Druck steht, der höher als der Druck der inerten Atmosphäre, jedoch geringer als oder gleich 2 bar ist.

5. Vorrichtung zum Evakuieren von in einem unter hohem Druck stehenden umschlossenen Raum enthaltenen Gasen in die Umgebung, mit einer an den genannten umschlossenen Raum angrenzenden und von diesem durch ein Schutzorgan getrennten Evakuierungsleitung, dadurch gekennzeichnet, daß sie zur Durchführung des Verfahrens nach Anspruch 1 umfaßt:

— eine im Weg der Evakuierungsgase angeordnete und den gesamten Querschnitt der Evakuierungsleitung ausfüllende Verschlußeinrichtung,
— einen ersten Verteilerkreis für inertes Gas, der über eine Leitung an den zwischen dem Schutzorgan und der Verschlußeinrichtung liegenden Teil der Evakuierungsleitung angeschlossen ist, und
— Mittel zum Verschließen der genannten Leitung zwecks Regelung des durch den ersten Verteilerkreis gelieferten Gasvolumens.

6. Vorrichtung nach Anspruch 5, dadurch gekennzeichnet, daß die Verschlußeinrichtung eine Gummiblase ist und daß die Evakuiervorrichtung weiters einen zweiten Gasverteilerkreis, der über eine Leitung an die Verschlußeinrichtung angeschlossen ist, und an der genannten Leitung angeordnete Gaseinlaßmittel zur Regelung des vom zweiten Verteilerkreis gelieferten Gasvolumens besietzt.

7. Vorrichtung nach Anspruch 5 oder 6, weiters mit Mitteln zum Einspritzen eines Kühlmediums in die Evakuierungsleitung, wobei die genannten Mittel durch eine die Öffnung des Schutzorgans abfühlende Einrichtung gesteuert sind.

8. Vorrichtung nach Anspruch 7, dadurch gekennzeichnet, daß die Mittel zum Einspritzen eines Kühlmediums in dem oberhalb der Verschlußeinrichtung liegenden Teil der Evakuierungsleitung angeordnet sind.

## Claims

1. Process for reducing the danger of ignition and explosion due to the decomposition of ethylene under high pressure, comprising maintaining in an inert atmosphere, i.e. substantially free of gases able to react with the decomposition gases, at least the part of the evacuation system that is directly adjacent to the high-pressure vessel in which ethylene decomposition may take place.

2. Process according to claim 1, characterized in that said inert atmosphere comprises at least one gas selected from the group consisting of nitrogen, carbon dioxide, argon, helium, neon, krypton, and xenon.

3. Process according to claim 1 or claim 2, characterized in that the pressure of the inert atmosphere maintained in the said part of the evacuation system is equal to or less than 1.5 bar.

4. Process according to claim 3, characterized in that the pressure of the inert atmosphere is maintained by arranging across the evacuation system a sealing means inflated by means of a gas to a pressure exceeding that of the inert atmosphere and equal to or less than 2 bars.

5. Apparatus for evacuating to the atmosphere gases contained in a high-pressure vessel, comprising an evacuation pipe adjacent to said vessel and separated therefrom by a safety means, characterized in that it comprises, for carrying out the process of claim 1:

— a sealing means located in the evacuation path of the gases and occupying all of the cross-section of the evacuation pipe, and
— a first gas supply circuit connected by a pipe to that part of the evacuation pipe located between the safety means and the sealing means, and means for said circuit to control the volume of gas fed by said first supply circuit.

6. Apparatus according to claim 5, characterized in that the sealing means is a rubber balloon means and the evacuation system further comprises a second gas supply circuit connected by a pipe to the sealing means, and means for said circuit to control the volume of gas fed by said second supply circuit.

7. Apparatus according to claim 5 or claim 6, further comprising means for injecting a coolant into the evacuation pipe, said means being operated by a means for detecting the opening of the safety means.

8. Apparatus according to claim 7, characterized in that said means for injecting a coolant are located in that part of the evacuation pipe that is above the sealing means.

Fig. 1

0018 882